Europäisches Patentamt

European Patent Office

Office européen des brevets

(11) Veröffentlichungsnummer: **0 163 847**
**B1**

# (12) EUROPÄISCHE PATENTSCHRIFT

(45) Veröffentlichungstag der Patentschrifft:
28.02.90

(21) Anmeldenummer: 85104137.6

(22) Anmeldetag: 04.04.85

(51) Int. Cl. 5: **G 01 N 21/45**

(54) Interferenz-Refraktometer.

(30) Priorität: 14.04.84 DE 3414261

(43) Veröffentlichungstag der Anmeldung:
11.12.85 Patentblatt 85/50

(45) Bekanntmachung des Hinweises auf die Patenterteilung:
28.02.90 Patentblatt 90/09

(84) Bennante Vertragsstaaten:
CH DE FR GB IT LI NL SE

(56) Entgegenhaltungen:
EP-A-0 093 927
DE-A-3 244 783
GB-A-2 071 355
US-A-4 278 887

(73) Patentinhaber: **Firma Carl Zeiss**
**D-7920 Heidenheim (Brenz) (DE)**
(84) Bennante Vertragsstaaten: CH DE FR IT LI NL SE

(73) Patentinhaber:**CARL-ZEISS-STIFTUNGtradingasCARL**
**ZEISS**
**D-7920 Heidenheim (Brenz) (DE)**
(84) Bennante Vertragsstaaten: GB

(72) Erfinder: **Mächler, Meinrad**
**Sulzgasse 2**
**D-7090 Ellwangen (DE)**
Erfinder: **Sachse, Richard, Dipl.-Ing. (FH)**
**Ulmenweg 21**
**D-7923 Königsbronn (DE)**
Erfinder: **Schlemmer, Harry, Dr.rer.nat.Dipl.-Phys.**
**Fichtestrasse 63**
**D-7080 Aalen (DE)**

## Beschreibung

Die vorliegende Erfindung betrifft eine Vorrichtung zur Bestimmung des spektralen Verlaufes der Brechzahl (Dispersion) einer Flüssigkeit oder eines Gases mit einer Einrichtung zur Beleuchtung der Flüssigkeit oder des Gases mit weißem Licht zur Erzeugung von Interferenzen. Die Erfindung betrifft insbesondere die Messung an sehr kleinen Volumina, wie sie z. B. bei der (Hochdruck-)Flüssigkeitschromatographie (HPLC) und insbesondere bei der Mikro-HPLC vorkommen.

Seit langer Zeit sind Zweistrahlinterferometer zur Messung der Brechzahlen von Flüssigkeiten oder Gasen bekannt, welche die Brechzahlmessung auf den Vergleich der optischen Weglängen in zwei geometrisch gleichen, voneinander getrennten Zellen zurückführen. In der einen Zelle befindet sich die zu untersuchende Substanz, in der anderen eine Substanz mit bekannter Brechzahl oder Vakuum.

In den meisten derartigen Interferometern werden zwei Steifensysteme durch zwei getrennte aber gleichartige Strahlengänge erzeugt, von denen der eine nicht durch das Messobjekt geht und deshalb während der Messung unverändert bleibt und damit als Ableseindex für das andere Streifensystem dient, das sich bei der Messung ändert. Interferometer mit zwei Streifensystemen haben den Vorteil, daß sie weitgehend unempfindlich gegen Temperatureinflüsse und mechanische Deformationen des Gerätes sind.

Die Ermittlung der Brechzahl erfolgt, indem die Auswanderung des Streifensystems entweder an einer vorgesehenen Skala abgelesen wird oder indem die Streifen durch einen optischen Kompensator im Strahlengang der Meßzelle wieder in die Nullstellung geschoben werden, wobei die Verschiebegröße den Meßwert ergibt. Derartige Interferometer sind z. B. in der DE-PS-1 022 032 und in der DE-OS-2 507 183 beschrieben.

In der DE-PS-2 306 091 ist ein Interferenz-Refraktometer beschrieben, bei der Meß- und Referenzzelle als getrennte Fabry-Perot-Interferometer ausgebildet sind, deren Längen mit Hilfe einer gemeinsamen, elektrostriktiven Einrichtung periodisch verändert werden. Beide Zellen haben kugelförmig gekrümmte Interferenzspiegel mit hohem Reflexionsvermögen, so daß das eingestrahlte Licht erst noch sehr vielen Reflexionen wieder austritt. Beim Durchfahren des Bereiches der elektrostriktiven Einrichtung treten bei monochromatischem Licht scharf begrenzte Resonanzdurchlässigkeiten auf, welche deutlich gegen vergleichsweise breite Bereiche abgegrenzt sind, in denen die Zellen lichtundurchlässig sind. Gelangt ein Medium mit geändertem Brechungsindex in die Meßzelle so verschieben sich über die Änderung der optischen Weglänge die Resonanzfrequenzen der Meßzelle gegenüber den Resonanzfrequenzen der Referenzzelle; die Größe der Verschiebung ist ein Maß für die Änderung des Brechungsindex. Störeinflüsse, welche in gleicher Weise die Resonanzfrequenzen beider Zellen ändern, gehen nicht in die Messung ein.

Bei den bisher aufgeführten Geräten ist die Bestimmung der Brechzahl in Abhängigkeit von der Wellenlänge - wenn sie überhaupt möglich ist - nur durch Einzelmessungen bei verschiedenen Wellenlängen möglich und daher sehr umständlich und zeitraubend.

Aus der DE-PS-2 153 315 ist ein Interferenz-Spektralphotometer bekannt, mit dem der spektrale Verlauf des Brechungsindex oder der Durchlässigkeit einer Probe bestimmt werden kann. Dabei wird das von einem Kontinumusstrahler ausgehende Lichtbündel in zwei Teilstrahlbündel aufgeteilt, die mit unterschiedlichen Frequenzen intensitätsmoduliert werden, eine Interferometeranordnung parallel zueinander durchlaufen, in dieser in je zwei Teilstrahlen aufgespalten und anschließend wieder vereinigt und einem gemeinsamen Strahlungsempfänger zugeführt werden. Die Interferometeranordnung enthält in bekannter Weise einen Scanningspiegel zur einstellbaren Veränderung der optischen Wegdifferenzen des einen Interferometerzweiges und liefert aus der Auswertung des Empfängersignales infolge der zwei Teilstrahlbündel gleichzeitig das Proben- und das Hintergrund-Interferogramm, aus denen mit Hilfe eines geeigneten Rechners der spektrale Verlauf des Brechungsindex oder der Durchlässigkeit der Probe gewonnen wird.

Praktische Anwendungen dieses Gerätes zur Brechzahlmessung sind nicht bekannt geworden, was nicht verwunderlich ist, weil die Dispersion in dem für das Gerät angegebenem Spektralbereich von 5 bis 500 µm nicht besonders interessant ist. Außerdem eignet sich das Gerät auch nicht für Messungen bei starker Absorption.

Schließlich ist aus der Literatur bekannt, die Brechzahl von festen Stoffen aus den Interferenzüberlagerungen bei Transmissions- oder Reflexionsspektren zu bestimmen. Meist wird in der Spektroskopie bei bekannter Brechzahl aus den Interferenzüberlagerungen die genaue Schichtdicke bestimmt. Es sind jedoch auch Arbeiten bekannt, in denen bei bekannter Schichtdicke die Brechzahl bestimmt wird. So haben z. B. D.H. Rank u.M. (J.o.t. Optical Society o. America 44, 13 (1954)) den Brechungsindex von einem 3 mm dicken Germaniumkristall im Wellenlängenbereich von 2,0 bis 2,4 µm durch Auswertung der Interferenzüberlagerungen des Transmissionsspektrum bestimmt. N.J. Harrik (Applied Optics 10, 2344 (1971)) hat durch Messung der Reflexionsspektren bei verschiedenen Einfallswinkeln sowohl die Brechzahl im Bereich von 2,5 bis 7 µm als auch die Dicke von Folien bestimmt.

Für die spektroskopische Analyse von geringen Mengen strömender Flüssigkeit ist aus der GB-A-2 071 355 eine Durchflußküvette bekannt, welche aus einem optischen Fenster und einer reflektierenden Rückwand besteht. Der Ein- und Austritt der Flüssigkeit erfolgt durch die Rückwand; die gewünschte Schichtdicke wird durch eine zwischen Fenster und Rückwand angeordnete abdichtende Distanzscheibe erreicht.

3

Die bekannten Vorrichtungen sind nicht geeignet für spektralrefraktometrische Messungen an sehr kleinen Flüssigkeits- oder Gasvolumina, wie sie z. B. bei der (Hochdruck-)Flüssigkeitschromatographie und besonders bei der Mikro-HPLC vorliegen. Dort besteht außerdem die Forderung, bis in das UV-Gebiet hinein zu messen. Die bekannten Vorrichtungen sind ferner schlecht oder gar nicht geeignet bei starker Absorption und für Proben, bei denen durch die zur Messung zugeführte Strahlungsenergie die Gefahr einer thermischen oder photochemischen Zersetzung besteht.

Der vorliegenden Erfindung liegt daher die Aufgabe zugrunde, eine Vorrichtung anzugeben, mit welcher sich der spektrale Verlauf der Brechzahl bis in das UV-Gebiet von Flüssigkeiten oder Gasen auch an sehr kleinen Probenvolumina und auch bei starker Absorption möglichst genau und zugleich in einer für Routineaufgaben geeigneten einfachen Weise messen läßt. Der Erfindung liegt ferner die Aufgabe zugrunde, bei Substanzen, bei denen infolge des sehr kleinen Probenvolumens die Gefahr einer Veränderung der Probe durch die zugeführte Meßstrahlung besteht, die Strahlenbelastung so klein wie möglich zu halten. Der Erfindung liegt weiterhin die Aufgabe zugrunde, auch eine fortlaufende Messung zu ermöglichen, bei der Änderungen im Bereich von 1/100 s noch erfaßt werden.

Die gestellte Aufgabe wird bei einer Vorrichtung nach dem Oberbegriff des Anspruches 1 erfindungsgemäß dadurch gelöst, daß ein lichtdurchlässiges Fenster in einem festen Abstand zwischen 1 und 50 µm vor einem zweiten lichtdurchlässigen Fenster oder vor einem vorzugsweise teilweise reflektierenden Begrenzungsteil angeordnet ist, wobei die den festen Abstand bildenden Flächen mindestens annähernd parallel sind und als Grenzflächen zur Flüssigkeit oder zum Gas Teillichtbündel erzeugen, und daß eine Einrichtung zur Messung des wellenlängenabhängigen Intensitätsverlaufes der interferierenden Teillichtbündel vorhanden ist.

In einer vorteilhaften Ausführungsform ist für die Messung des wellenlängenabhängigen Intensitätsverlaufes ein Diodenzeilenspektrometer vorgesehen, welches über eine Elektronikeinheit mit einem Auswerterechner verbunden ist.

Für fortlaufende Bestimmung des spektralen Verlaufes der Brechzahl sind die beiden lichtdurchlässigen Fenster, bzw. das lichtdurchlässige Fenster und das vorzugszweise teilweise reflektierende Bauelement als Teile einer Durchflußküvette ausgebildet.

Besonders vorteilhaft ist es, für die Zuführung des weißen Lichtes zur Beleuchtung und für die Weiterleitung des Lichtes zur Messung Lichtleiter vorzusehen, da auf diese Weise der Meßort von der übrigen Meßvorrichtung getrennt wird und z. B. bei der Flüssigkeitschromatographie die Durchflußküvette unmittelbar hinter der Trennsäule angeordnet werden kann.

In einer weiteren vorteilhaften Ausführungsform der Erfindung ist für die Messung das in die

4

Einstrahlungsrichtung reflektierte Licht vorgesehen. Dadurch muß die zweite die Flüssigkeit oder das Gas begrenzende Fläche nicht als Fenster sondern kann als reflektierendes Begrenzungsteil ausgebildet sein. Es ist zweckmäßig, dieses Bauelement aus einem gut wärmeleitenden Material zu machen und, falls seine Wärmekapazität nicht schon bei den kleinen Probenvolumina für eine ausreichende Wärmeabfuhr ausreicht, mit einer Temperiereinrichtung zu verbinden.

Für eine weitere Verringerung der Strahlungsbelastung der Probe können Filter oder ein Doppelmonochromator mit gegenläufiger Dispersion zwischen Beleuchtungseinrichtung und Probe angeordnet werden.

Weitere vorteilhafte Ausgestaltungen der Erfindung gehen aus den Unteransprüchen hervor.

Ein Vorteil der erfindungsgemäßen Vorrichtung besteht insbesondere für die HPLC darin, daß abhängig von Anforderungen und Probenmaterial entweder im Bereich der Absorption zwecks Steigerung der Empfindlichkeit und des Informationsinhaltes oder neben den Absorptionsbanden bei strahlungsempfindlichen Proben gemessen werden kann. Zur Identifizierung einzelner Substanzen ist im allgemeinen eine Messung innerhalb der Absorptionsbanden notwendig; dagegen langt für die quantitative Bestimmung einzelner (bekannter) Substanzen eine Messung der Brechzahl außerhalb der Absorptionsbanden. Im Gegensatz dazu ist man bei Absorptionsmessungen auch für quantitative Bestimmungen bei der HPLC infolge der geringen Probenvolumina auf die Messung im Bereich starker Absorption angewiesen, um eine ausreichende Empfindlichkeit zu erhalten. Da Absorptionsmessungen zwangsläufig immer mit Energieabsorption verbunden sind, ist eine derartige Messung bei strahlungsempfindlichen Proben mit Nachteilen verbunden.

Der Vorteil der Brechzahlmessung besteht darin, daß sie in Wellenlängenbereichen mit keiner oder geringer Absorption auch bei strahlungsempfindlichen Proben für quantitative Messungen brauchbar ist und daß sie in Wellenlängenbereichen mit starker Absorption bei kleinen Probenvolumina gegenüber Absorptionsmessungen eine wesentliche Steigerung der Empfindlichkeit und der Meßgenauigkeit bringt oder durch eine geringere Intensität der Meßstrahlung eine geringere thermische Belastung der Probe ermöglicht. Die Messung des Brechzahlverlaufes in einem Wellenlängenbereich bringt in beiden Fällen gegenüber der Messung bei nur einer Wellenlänge eine Steigerung der Empfindlichkeit bzw. der Meßgenauigkeit.

Die Erfindung wird im folgenden anhand der in den Figuren 1 bis 4 dargestellten Ausführungsbeispiele näher erläutert. Dabei zeigen:

Fig. 1    eine schematische Darstellung der gesamten Vorrichtung;

Fig. 2    eine einfachere Ausführung der Beleuchtungseinrichtung;

Fig. 3   eine schematische Darstellung einer geeigneten Durchflußküvette und

Fig. 4   ein Schnitt durch ein reflektierendes Begrenzungsteil für die Durchflußküvette.

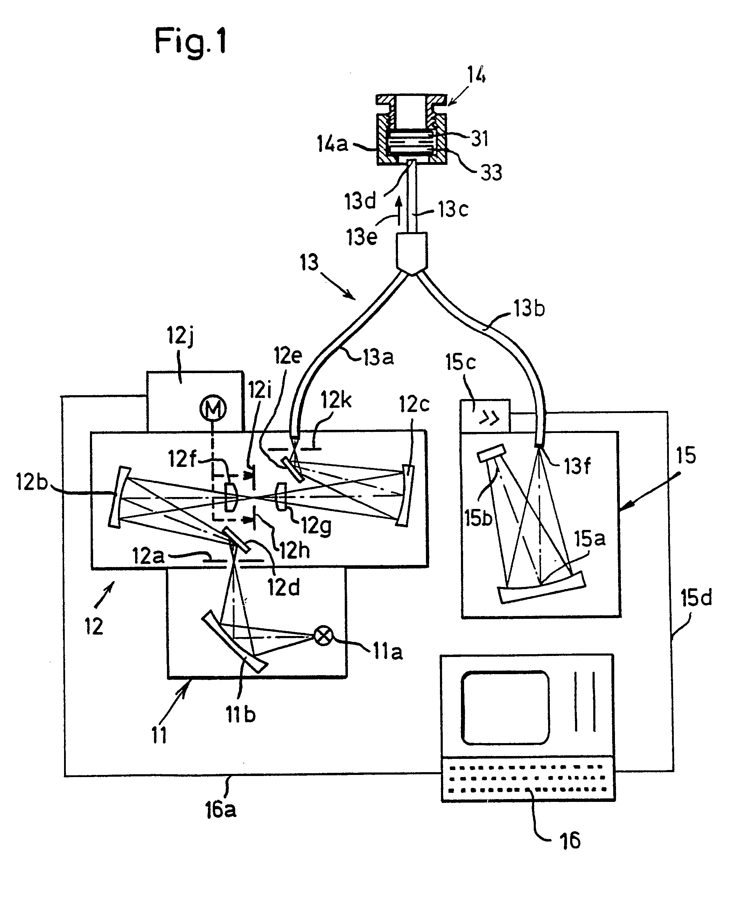

In Figur 1 ist mit 11 eine Beleuchtungseinrichtung bezeichnet, welche aus einer Lichtquelle 11a, z. B. einer Xenonlampe, und einem elliptischen Hohlspiegel 11b besteht. Der Hohlspiegel 11b bildet die Lichtquelle 11a auf den Eintrittsspalt 12a eines Doppelmonochromators 12 mit gegenläufiger Dispersion ab. Letzterer ist z. B. aus der DE-OS-2 919 925 bekannt. Er besteht aus zwei gleichartigen Monochromatoren mit den Konkavgittern 12b und 12c, zwei Umlenkspiegeln 12d und 12e, zwei Feldlinsen 12f und 12g und dem Austrittsspalt 12k. In der Ebene der Spaltbakken 12h und 12i des Mittelspaltes erzeugt das Konkavgitter 12b ein Spektrum der Lichtquelle 11a, aus welchem der gewünschte Bereich durch die Spaltbacken 12h und 12i ausgeblendet wird. Die Spaltbocken sind durch eine Vorrichtung 12j, die zwei Schrittmotore enthält, unabhängig voneinander verstellbar. Der zwischen den Spaltbokken 12h und 12i durchgelassene Spektralbereich wird durch das Konkavgitter 12c auf den Austrittsspalt 12k abgebildet, wobei durch den gleichartigen Aufbau beider Monochromatoren alle durchgelassenen Wellenlängen überlagert werden, so daß dort das Kontinuum eines begrenzten Wellenlängenbereiches entsteht.

Hinter dem Austrittsspalt 12k des Doppelmonochromators 12 ist der Zweig 13a eines verzweigten Lichtleiters 13 angeordnet, der die vom Doppelmonochromator 12 hindurchgelassene Strahlung der Beleuchtungseinrichtung 11 aufnimmt und sie zur Küvette 14 führt. Es ist zweckmäßig, die Zweige 13a und 13b des verzweigten Lichtleiters aus mehreren Lichtleitfasern zusammenzusetzen, die im Zweig 13c gemeinsam nebeneinander angeordnet sind. Die zum Zweig 13b gehörenden Lichtleitfasern nehmen das von der Küvette reflektierte Licht auf und führen es zum Spektrometer 15. Das gemeinsame Ende 13d aller Lichtleitfasern hat einen kurzen Abstand zu dem Küvettenfenster 33, dessen günstigsten Wert man leicht durch Probieren feststellen kann. Die Anordnung der Lichtleitfasern, die zum Zweig 13a einerseits und zum Zweig 13b andererseits gehören, kann am gemeinsamen Ende 13d zueinander statistisch sein.

Am Ende 13f des Lichtleitzweiges 13b sind die Lichtleitfasern zweckmäßigerweise in Form eines Spaltes angeordnet, so daß ihre Endflächen den sonst bei Spektrometern üblichen Eintrittsspalt ersetzen. Daher besteht das Spektrometer lediglich aus dem Konkavgitter 15a und der Diodenzeile 15b, welche mit der Eletronikeinheit 15c verbunden ist. Durch die Elektronikeinheit 15c werden die Signale der Diodenzeile 15b vorverarbeitet und über die Leitung 15d an den Rechner 16 gegeben, in dem die Auswertung erfolgt, auf die weiter unten noch eingegangen wird. Der Rechner 16 ist außerdem über die Leitung 16a mit der Elektronikeinheit 12i verbunden, von der zwei Schrittmotoren angesteuert werden, welche die Spaltbacken 12h und 12i des Mittelspaltes vom Doppelmonochromator 12 bewegen. Dadurch kann der Mittelspalt entweder noch fest vorgegebenen Programmen eingestellt werden, oder er kann durch die vom Rechner ermittelten Werte der Brechzahl, aus denen sich Wellenlängenbereiche mit starker Absorption feststellen lassen, derart vom Rechner gesteuert werden, daß die thermische Belastung der Probe klein bleibt. Da eine Messung des gesamten Brechzahlverlaufes weniger als 1/100 s dauert, kann die Strahlenbelastung während dieser Zeit für die meisten Proben genügend klein gehalten werden. Vom Rechner werden immer nur die Messungen in denjenigen Wellenlängenbereichen ausgewertet, in denen die Probe mit Strahlung beaufschlagt wird.

Es ist vorteilhaft, das Spektrometer so zu dimensionieren, daß es ein Öffnungsverhältnis hat, welches die Apertur des Lichtleiters 13b ohne Beschnitt aufnimmt. Mit holographisch erzeugten Konkavgittern ist dies möglich, wie aus der DE-OS-3 215 879 bekannt.

Selbstverständlich kann der verzweigte Lichtleiter 13 an seinen drei Enden so ausgebildet sein, daß diese durch einfach zu handhabende Steckverbindungen mit dem Doppelmonochromator 12, der Küvette 14 und dem Spektrometer 15 verbunden werden können, wobei auch eine genau definierte Lage der Lichtleitfaserenden möglich ist. Derartige Verbindungsteile sind z. B. ebenfalls in der DE-OS-3 215 879 beschrieben.

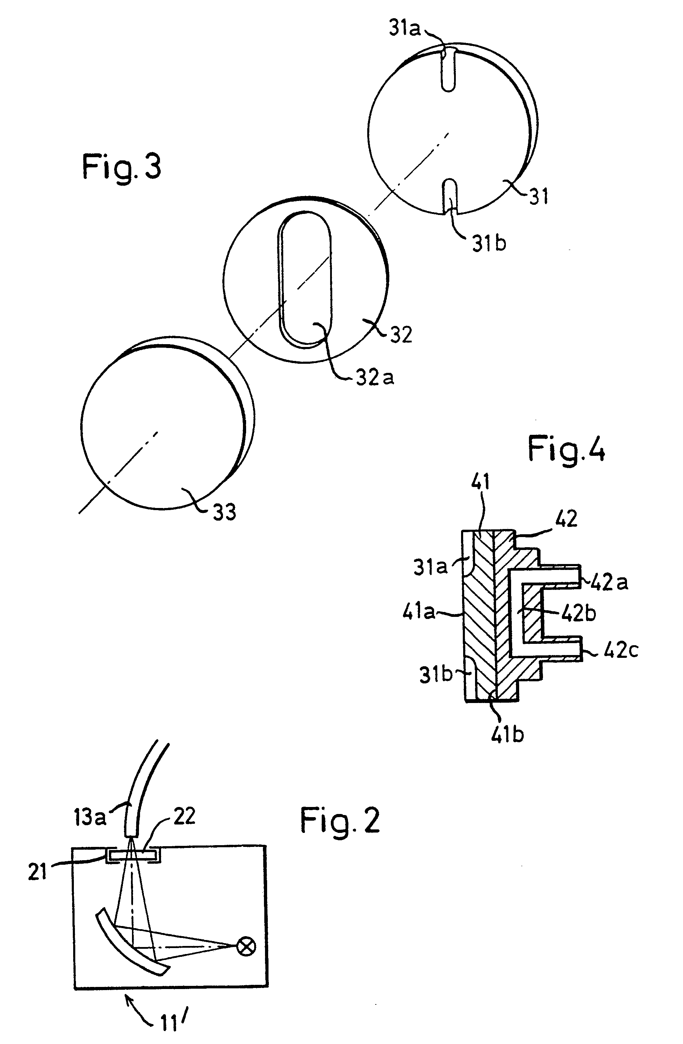

In Figur 2 ist eine einfachere Ausführungsform für die Beleuchtung dargestellt. Hier ist der Lichtleiterzweig 13a direkt an die Beleuchtungseinrichtung 11' angeschlossen. Als Ersatz für den in Figur 1 verwendeten Doppelmonochromator 12 ist in der Beleuchtungseinrichtung 11' ein Filterschacht 21 angebracht, in den verschiedene Filter 22 eingesetzt werden können, deren Durchlaßkurven auf die zu messenden Proben und ihre strahlungsempfindlichen Wellenlängenbereiche abgestimmt sind. Für nicht strahlungsempfindliche Proben kann man selbstverständlich auf Filter verzichten.

Figur 3 zeigt Einzelheiten eines möglichen Aufbaus der in Figur 1 mit 14 bezeichneten Küvette. In der dort mit 14a bezeichneten, nicht maßstäbliche gezeichneten Fassung sitzen die beiden Fenster 31 und 33 aus optisch durchlässigem Material und die Abstandsfolie 32. In das Fenster 31 sind ein Zuleitungskanal 31a und ein Ableitungskanal 31b eingefräst. Die Abstandsfolie 32 hat eine Aussparung 32a für den Meßraum und für die inneren Enden der Einfräsungen 31a und 31b. Wenn alle drei Teile 31, 32 und 33 z. B. in der in Fig. 1 angedeuteten Schraubfassung 14a aufeinandergepreßt werden, entsteht eine Durchflußküvette mit der Schichtdicke der Abstandsfolie 32. Eine derartige Küvette kann selbstverständlich auch für Einmalmessungen verwendet werden, indem man sie z. B. mit einer geeigneten Kolbenspritze, deren Spitze in die Einfräsung 31b paßt, füllt und entleert.

Für die HPLC werden die Kapillaren der Säule in die Einfräsungen 31a und 31b gesteckt. Durch geeignete zylinderförmige Dichtungen aus elastischem Material, welche die Kapillaren an den äußeren Enden der Einfräsungen 31a und 31b umgeben und welche in Richtung der Kapillarenachsen zusammengedrückt werden, läßt sich eine derartige Küvette auch in bekannter Weise als druckdichte Durchflußküvette verwenden.

Wenn – wie in Figur 1 dargestellt – das in die Strahlungsrichtung 13e reflektierte Licht für die Messung verwendet wird kann das lichtdurchlässige Fenster 31 in Figur 3 durch die in Figur 4 im Schnitt dargestellte Baugruppe ersetzt werden. Dabei ist mit 41 ein Begrenzungsteil bezeichnet, das die gleichen Abmessungen hat wie das lichtdurchlässige Fenster 31; auch der Zuleitungskanal 31a und der Ableitungskanal 31b sind gleich ausgeführt. Das Begrenzungsteil 41 besteht jedoch aus einem Material mit guter Wärmeleitfähigkeit; seine Oberfläche 41a sollte ungefähr das gleiche Reflexionsvermögen wie das Material des Fensters 33 haben. Das Begrenzungsteil 41 braucht nicht lichtdurchlässig zu sein, muß sich aber polieren lassen. Ein geeignetes Material ist z. B. Berylliumoxyd oder Aluminiumnitrat, eine verdichtete Keramik, auf das gegebenenfalls eine Spiegelschicht aus Platin, Iridium oder Rhodium aufgedampft oder galvanisch aufgebrocht wird. Die Rückseite 41b des Bauelementes 41 ist ebenfalls plan, so daß ein guter Wärmekontakt zu dem Temperierteil 42 besteht, welches Schlauchanschlüsse 42a und 42c und einen (schematisch dargestellten) Temperierkanal 42b hat und mit einem (nicht gezeichneten) Flüssigkeitsthermostaten verbunden ist. Selbstverständlich kann an Stelle des Temperierteiles 42 auch ein Peltier-Element verwendet werden. Entscheiderd ist der gute Wärmekontakt zu der verhältnismäßig dünnen Flüssigkeits- oder Gasschicht auf der Oberfläche 41a, durch die eine gute Thermostatisierung der Probe erreicht wird, welche für viele Substanzen auch dann ausreichend ist, wenn das zur Messung zugeführte Licht absorbiert wird. Für einen Teil der Anwendungsfälle reicht durch die kleinen Probenvolumina die Wärmekapazität des Begrenzungsteiles 41 bereits aus, so daß man auf eine Temperiereinchtung verzichten kann.

Für den zur Messung vorteilhaften Schichtdickenbereich von 1 bis 50 μm kommen in erster Linie zerlegbare Küvetten – wie die oben beschriebene – infrage, weil praktisch nur bei ihnen eine einwandfreie Reinigung möglich ist. Für genaue Messungen muß daher zunächst die exakte Schichtdicke der zusammengesetzten Küvette bestimmt werden. Diese Bestimmung erfolgt entweder an der mit Luft oder einem Gas gefüllten Küvette oder was vor allem bei der HPLC wegen des Druckeinflusses besser ist - an der mit Flüssigkeit gefüllten und unter Druck stehenden Küvette, also z.B. am Beginn einer HPLC-Messung mit der reinen Lösungsmittel

Die exakte Schichtdicke kann, unter der Voraussetzung, daß für das verwendete Gas oder die verwendete Flüssigkeit der Brechzahlverlauf (Dispersion) n (λ) bekannt ist, mit folgender Gleichung berechnet werden:

$$d = \frac{\lambda_a \, \lambda_e \, P}{2 \, |n \, (\lambda_e) \, \lambda_a - (\lambda_a) \, \lambda_e|}$$

Dabei sind

- $\lambda_a$ und $\lambda_e$ Wellenlängen, bei denen infolge von Interferenz in der gemessenen Intensität Maxima oder Minima auftreten, und
- P ist die Anzahl der Perioden zwischen diesen Extrema (P = 1 für den Abstand von einem Maximum bis zum nächsten).

Eine große Genauigkeit erhält man, wenn die Zahl der Perioden groß ist; es ist daher zweckmäßig, in einem Wellenlängenbereich (und/oder an einer Probe) zu messen, in dem die Brechzahl sich wenig bis gar nicht ändert. (Phasensprünge an den Grenzflächen haben praktisch keinen Einfluß, da sie in den infrage kommenden Wellenlängenbereichen konstant sind.)

Nachdem auf diese Weise die exakte Schichtdicke der Küvette ermittelt wurde, kann der Brechzahlverlauf n (λ) von den nun in die Küvette eingebrachten Proben aufgrund der dann infolge von Interferenz auftretenden Maxima oder Minima aus folgender Gleichung ermittelt werden:

$$n_{ij} = \frac{\lambda_i \, \lambda_j \, P}{2d \, | \, \lambda_i - \lambda_j \, |}$$

Dabei ist

- $n_{ij}$ die mittlere Brechzahl für das Wellenlängenintervall von $\lambda_i$ bis $\lambda_j$, wobei
- $\lambda_i$ und $\lambda_j$ Wellenlängen sind, bei denen ein Maximum oder Minimum vorliegt;
- P ist wieder die Anzahl von Perioden zwischen diesen Extrema.

Um bei Änderungen der Brechzahl möglichst genaue Werte zu erhalten, wird man die Intervalle $\lambda_i$ bis $\lambda_j$ möglichst klein wählen; man erhält dann jedoch einen großen relativen Fehler

$$dn/n \approx d \, \lambda \, / \, \lambda_j - \lambda_j.$$

Dies kann man jedoch, wenn die zu messende Probe in einem Wellenlängenbereich keine zu große Änderung der Brechzahl aufweist, durch folgendes Vorgehen vermeiden : Wenn bei $\lambda_j$ ein Maximum liegt, dann gilt für die Ordnungszahl:

$$m_j \approx \frac{2n_{ij}d}{\lambda_j}$$

Man macht dabei die Voraussetzung, daß $n_{ij} \approx n_j$ ist. Der dabei auftretende Fehler führt zu einem

Zahlenwert für $m_j$, der nicht ganzzahlig ist, und der durch Abrunden auf den nächsten ganzzahligen Wert beseitigt werden kann. Anschließend läßt sich durch einfaches Abzählen die Brechzahl für alle Extrema noch der Gleichung

$$n = m \, \frac{\lambda}{2d}$$

bestimmen. Der hierbei auftretende relative Fehler beträgt nur noch $dn/n = d\lambda/\lambda$.

## Patentansprüche

1. Vorrichtung zur Bestimmung des spektralen Verlaufes der Brechzahl (Dispersion) einer Flüssigkeit oder eines Gases mit einer Einrichtung zur Beleuchtung der Flüssigkeit oder des Gases mit weißem Licht zur Erzeugung von Interferenzen, dadurch gekennzeichnet, daß ein lichtdurchlässiges Fenster (33) in einem festen Abstand zwischen 1 und 50 µm vor einem zweiten lichtdurchlässigen Fenster (31) oder vor einem vorzugsweise teilweise reflektierenden Begrenzungsteil (41) angeordnet ist, wobei die den festen Abstand bildenden Flächen mindestens annähernd parallel sind und als Grenzflächen zur Flüssigkeit oder zum Gas Teillichtbündel erzeugen, und daß eine Einrichtung (15) zur Messung des wellenlängenabhängigen Intensitätsverlaufes der interferierenden Teillichtbündel vorhanden ist.

2. Vorrichtung noch Anspruch 1, dadurch gekennzeichnet, daß für die Messung des wellenlängenabhängigen Intensitätsverlaufes ein Diodenzeilenspektrometer (15) vorgesehen ist, welches über eine Elektronikeinheit (15c) zur Signalvorverarbeitung mit einem Auswerterechner (16) verbunden ist.

3. Vorrichtung nach Anspruch 1 oder 2, dadurch gekennzeichnet, daß für die Messung das in die Einstrahlungsrichtung (13e) reflektierte Licht vorgesehen ist.

4. Vorrichtung nach Anspruch 3, dadurch gekennzeichnet, daß das die zweite Grenzfläche bildende reflektierende Begrenzungsteil (41) thermostatisierbar ist.

5. Vorrichtung nach einem der Ansprüche 1 bis 4, dadurch gekennzeichnet, daß für die Zuführung des weißen Lichtes zur Beleuchtung und für die Weiterleitung des Lichtes zur Messung Lichtleiter (13a, 13b) vorgesehen sind.

6. Vorrichtung nach einem der Ansprüche 3 bis 5, dadurch gekennzeichnet, daß ein verzweigter Lichtleiter (13) vorgesehen ist, dessen getrennte Enden (13a, 13b) mit der Beleuchtungseinrichtung (11) und der Einrichtung (15) zur Messung des wellenlängenabhängigen Intensitätsverlaufes verbunden sind und dessen gemeinsames Ende vor dem lichtdurchlässigen Fenster (33) angeordnet ist.

7. Vorrichtung nach einem der Ansprüche 1 bis 6, dadurch gekennzeichnet, daß zwischen der Beleuchtungseinrichtung (11') und dem lichtdurchlässigen Fenster (33) ein Filter (22) angeordnet ist, welches so dimensioniert ist, daß es in dem Wellenlängenbereich, in dem die Flüssigkeit oder das Gas stark absorbiert, eine geringe Durchlässigkeit hat, und daß in diesem Wellenlängenbereich keine Meßwertausgabe vorgesehen ist.

8. Vorrichtung nach einem der Ansprüche 1 bis 6, dadurch gekennzeichnet, daß zwischen der Beleuchtungseinrichtung (11) und dem lichtdurchlässigen Fenster (33) ein Doppelmonochromator mit gegenläufiger Dispersion und veränderlichem Mittelspalt (12h, 12i) angeordnet ist, welcher nur den Wellenlängenbereich durchläßt, in dem die Flüssigkeit oder das Gas nicht stark absorbiert und daß nur in diesem Wellenlängenbereich eine Meßwertausgabe vorgesehen ist.

9. Vorrichtung nach Anspruch 8, dadurch gekennzeichnet, daß der veränderliche Mittelspalt (12h, 12i) eine elektrische Steuereinrichtung (12j) hat, welche mit dem Rechner (16) verbunden ist.

10. Vorrichtung nach einem der Ansprüche 1 bis 9, dadurch gekennzeichnet, daß sie für die Flüssigkeitschromatographie verwendbar ist.

## Claims

1. Arrangement for determining the spectral course of the refractive index (dispersion) of a fluid or a gas with an device for illuminating the fluid or gas with white light for generating interferences, characterized in that a light transmitting window (33) is mounted at a fixed spacing of 1 to 5 µm in front of a second light transmitting window (31) or in front of a boundary part (41) which is preferably at least partially reflective, whereby the surfaces building the fixed spacing are at least approximately parallel and as boundary surfaces to the fluid or gas generate component light bundles and that a device (15) exists for the measurement of the wavelength dependent intensity course of the interfering component light bundles.

2. Arrangement according to claim 1, characterized in that for the measurement of the wavelength dependent intensity course a diode-array spectrometer (15) is provided which is connected via an electronic unit (15c) for signal treatment with an evaluation computer (16).

3. Arrangement according to claim 1 or 2, characterized in that the light reflected in the direction (13e) of the incoming light is provided for measurement.

11

4. Arrangement according to claim 3, characterized in that the boundary part (41) which is building the second surface bounding can be thermostated.

5. Arrangement according to claim 1 to 4, characterized in that for leading the white light for illumination and for leading the light for measuring light conductors (13a, 13b) are provided.

6. Arrangement according to claim 3 to 5, characterized in that a branched light conductor (13) is provided, the seperated ends (13a, 13b) of which are connected with the illumination device (11) and the device (15) for the measurement of the wavelength dependent intensity course and the common end of which is arranged before the light transmitting window (33).

7. Arrangement according to claim 1 to 6, characterized in that between the illuminating device (11') and the light transmitting window (33) a filter (22) is disposed, which is dimensioned so as to have a low tranmittance in the wavelength range wherein the fluid or gas is intensely absorbant and that in this wavelength range no measured value output is provided.

8. Arrangement according to claim 1 to 6, characterized in that between the illuminating device (11) and the light transmitting window (33) a double monochromator having oppositely directed dispersion and adjustable central slit (12h, 12i) is disposed, which transmits only the wavelength range, wherein the fluid or gas is not intensely absorbant and that only in this wavelength range a measured value output is provided.

9. Arrangement according to claim 8, characterized in that the adjustable central slit (12h, 12i) has an electric control device (12j), which is connected to a computer (16).

10. Arrangement according to claim 1 to 9, characterized in that it is applicable for fluid chromatography.

**Revendications**

1. Dispositif pour déterminer l'allure spectrale de l'indice de réfraction (dispersion) d'un liquide ou d'un gaz, comprenant un dispositif pour éclairer le liquide ou le gaz avec de la lumière blanche afin de générer des interférences, caractérisé en ce qu'une fenêtre (33) laissant passer la lumière est disposée à une distance fixe, comprise entre 1 et 50 µm, devant une seconde fenêtre (31) laissant passer la lumière ou devant une pièce de délimitation (41) qui est de préférence partiellement réfléchissante, les faces définissant la distance fixe étant au moins approximativement parallèles et générant, en tant qu'interfaces avec le liquide ou le gaz, des faisceaux lumineux partiels, et qu'un dispositif (15) est prévu pour mesurer l'allure de

12

l'intensité, fonction de la longueur d'onde, des faisceaux lumineux partiels interférants.

2. Dispositif selon la revendication 1, caractérisé en ce que, pour la mesure de l'allure de l'intensité en fonction de la longueur d'onde, on a prévu un spectromètre (15) à barrette de diodes, qui est relié à travers une unité électronique (15c) à un calculateur d'exploitation (16) pour le traitement des signaux.

3. Dispositif selon la revendication 1 ou 2, caractérisé en ce que la lumière réfléchie suivant la direction d'incidence du rayonnement (13e) est prévue pour la mesure.

4. Dispositif selon la revendication 3, caractérisé en ce que la pièce de délimitation (41) réfléchissante, formant la seconde interface, est réglable en température.

5. Dispositif selon une des revendications 1 à 4, caractérisé en ce que des conducteurs de lumière (13a, 13b) sont prévus pour l'amenée de la lumière blanche servant à l'éclairement et pour la transmission de la lumière en vue de la mesure.

6. Dispositif selon une des revendications 3 à 5, caractérisé en ce qu'il comprend un conducteur de lumière (13) ramifié dont les extrémités séparées (13a, 13b) sont reliées au dispositif d'éclairage (11) et au dispositif (15) pour la mesure de l'allure de l'intensité en fonction de la longueur d'onde et dont l'extrémité commune est placée devant la fenêtre (33) laissant passer la lumière.

7. Dispositif selon une des revendications 1 à 6, caractérisé en ce qu'un filtre (22) est placé entre de dispositif d'éclairage (11') et la fenêtre (33) laissant passer la lumière, filtre qui est dimensionné de manière à présenter une faible transmission dans le domaine de longueurs d'onde dans lequel le liquide ou le gaz a une forte absorption, et qu'aucune délivrance de valeurs de mesure n'est prévue dans ce domaine de longueurs d'onde.

8. Dispositif selon une des revendications 1 à 6, caractérisé en ce qu'un monochromateur double à dispersions opposées et à fente centrale variable (12h, 12i) est placé entre le dispositif d'éclairage (11) et la fenêtre (33) laissant passer la lumière, monochromateur double qui laisse seulement passer le domaine de longueurs d'onde dans lequel le liquide ou le gaz ne présente pas une forte absorption, et qu'une délivrance de valeurs de mesure est prévue seulement dans ce domaine de longueurs d'onde.

9. Dispositif selon la revendication 8, caractérisé en ce que la fente centrale variable (12h, 12i) est pourvue d'un dispositif de commande électrique (12j) qui est relié au calculateur (16).

# Fig.1

Fig. 3

31a

31

31b

32

32a

33

Fig. 4

41

42

31a

41a

42a

42b

31b

42c

41b

13a

22

21

Fig. 2

11

3